# FASCICULE DE BREVET EUROPEEN

(11) **EP 3 069 113 B1**
(45) Date de publication et mention de la délivrance du brevet: **02.11.2022**
(21) Numéro de dépôt: 14796056.1
(22) Date de dépôt: 07.11.2014
(51) Int. Cl.: G01J 3/02, G01J 3/14, G01J 3/28

(54) **SPECTROPHOTOMÈTRE HYPERSPECTRAL LARGE BANDE POUR ANALYSER UN OBJET DANS LE DOMAINE FLUORESCENT**
BREITBANDIGES HYPERSPEKTRALES SPEKTROPHOTOMETER ZUR ANALYSE EINES OBJEKTS IM FLUORESZIERENDEN BEREICH
WIDEBAND HYPERSPECTRAL SPECTROPHOTOMETER FOR ANALYSING AN OBJECT IN THE FLUORESCENT DOMAIN

(30) Priorité: 12.11.2013 FR 1361024
(43) Date de publication de la demande: 21.09.2016
(73) Titulaire: Centre National d'Etudes Spatiales, 75001 Paris (FR)
(72) Inventeur: BOURCIER, Frédéric, 31450 Pompertuzat (FR)
(74) Mandataire: Germain Maureau
(86) Numéro de dépôt international: PCT/EP2014/073999
(87) Numéro de publication internationale: WO 2015/071181

(56) Documents cités:
- US-A- 4 215 273
- US-A- 5 459 325
- US-A1- 2012 092 665

## Description

### DOMAINE TECHNIQUE GENERAL ET ETAT DE LA TECHNIQUE

L'invention concerne le domaine de l'imagerie hyperspectrale ou spectro-imagerie consistant à acquérir une image dans un grand nombre de bandes spectrales étroites. Et l'invention trouve notamment application dans la caractérisation d'objets en particulier leur composition en analysant la fluorescence du composant.

On connait des techniques pour obtenir des images hyperspectrales d'une scène ou d'un composant mettant en œuvre des séries de filtre chacun associé à une longueur d'onde.

Ces techniques permettent de caractériser un objet lumineux pour notamment déterminer leur composition et cela de manière non destructive.

Toutefois ces techniques connues ne permettent pas d'imager des objets n'émettant pas spontanément de la lumière.

D'autres exemples de l'état de la technique sont donnés dans les documents US5459325 et US4215273.

### PRESENTATION DE L'INVENTION

L'invention permet d'analyser des objets émettant de la lumière après absorption d'un flux venant d'une source d'excitation et ce de manière continue sur une très large bande UV/visible, au moyen d'images hyperspectrales.

A cet effet, l'invention propose un spectrophotomètre hyperspectral large bande tel que défini dans la revendication 1.

L'invention est avantageusement complétée par les caractéristiques suivantes, prises seules ou en une quelconque de leur combinaison techniquement possible :
- l'ensemble d'illumination comprend au moins une source d'émission mobile et un miroir plan mobile, ladite source d'émission et ledit miroir permettant de balayer ligne par ligne l'objet à analyser lorsqu'ils se déplacent, de préférence en rotation, le miroir plan étant configuré pour collecter le faisceau fluorescent émis pas l'objet après absorption du faisceau ultra-violet issu de l'ensemble d'illumination pour le diriger vers la première face du premier miroir de repliement ;
- l'ensemble d'illumination comprend en outre une source d'illumination visible configurée pour émettre un faisceau lumineux dans le domaine du visible, ladite source d'illumination visible étant en outre configurée pour permettre un alignement de ladite source d'émission sur l'objet à analyser ;
- le spectrophotomètre comprend une lentille compensatrice disposée entre le premier miroir de repliement et le prisme disperseur, ladite lentille étant configurée pour corriger des aberrations introduites par la traversée du premier miroir de repliement, ledit premier miroir de repliement étant en silice fondue ;
- le spectrophotomètre comprend un quatrième miroir de changement de visée est disposé entre le prisme disperseur et le premier miroir de repliement, ledit quatrième miroir étant configuré pour limiter l'astigmatisme engendré par la traversée du faisceau du premier miroir de repliement ;
- le spectrophotomètre comprend un second miroir de repliement disposé entre le miroir d'imagerie et l'ensemble de détection, ledit miroir d'imagerie étant désaxé par rapport au second miroir d'imagerie ;
- l'ensemble d'illumination comprend trois sources, chacune configurée pour émettre un faisceau lumineux dans les longueurs d'ondes suivantes : 257 nm, 365 nm, 450nm ;
- le prisme disperseur et le premier miroir sont en matériau permettant d'assurer la transmission dans le domaine fluorescent, le matériau étant de préférence de la silice fondue.
Les avantages de l'invention sont multiples.
- L'achromatisme de l'UV jusqu'au visible est possible ;
- On conserve l'imagerie d'une ligne à raison d'au moins 200pixels de résolution spatiale et ce pour un continuum de longueur d'onde allant de l'ultra-violet jusqu'au visible. Ce spectre d'une ligne est acquis de manière instantanée ;
- Le miroir M0 plan mobile permet de balayer l'objet et de reconstruire une image matricielle de ce dernier pour chaque longueur d'onde par simple rotation ;
- Aucun miroir ne nécessite de perçage et donc il n'y a aucune occultation centrale entrainant une perte de flux dans le spectrophotomètre ;
- L'astigmatisme dû à la traversée de M1 est compensée soit par une lentille compensatrice soit par une fermeture de l'angle entre le premier miroir de repliement et l'axe optique au moyen miroir de changement de visée.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un spectrophotomètre selon un premier mode de réalisation de l'invention ;
- la figure 2 illustre un spectrophotomètre selon un second mode de réalisation de l'invention ;
   Sur l'ensemble des figures les éléments similaires portent des références identiques.

### DESCRIPTION DETAILLEE DE L'INVENTION

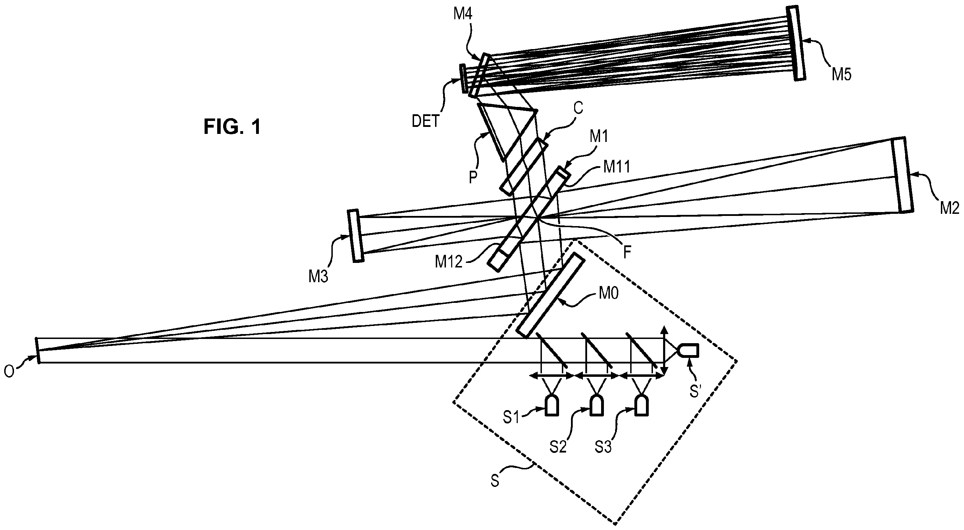

On a illustré en relation avec la **figure 1** un spectrophotomètre selon un premier mode de réalisation de l'invention.

Un objet à analyser O est disposé dans le plan objet du spectrophotomètre. Cet objet O à analyser n'émet pas de lumière spontanément, en revanche lorsqu'il est excité par une source Si d'émission d'un rayonnement électromagnétique dans une longueur d'onde appartenant au domaine de l'ultra-violet, l'objet O réémet un faisceau dans des longueurs d'onde plus élevées allant de l'UV au visible. C'est cette fluorescence qui permet de caractériser l'objet O à analyser spatialement selon une ligne et spectralement selon l'autre direction.

L'objet O à analyser peut être une colle, une résine, une peinture ou un élément organique ayant des propriétés fluorescentes.

Un ensemble S d'illumination comprend au moins une source Si, i=1, 2, 3 d'émission d'un rayonnement électromagnétique dans une longueur d'onde appartenant au domaine de l'ultra-violet en direction de l'objet O à analyser.

L'ensemble S est en outre configuré pour balayer ligne par ligne l'objet O à analyser au moyen de la source Si d'émission.

Ainsi, l'ensemble S émet en direction de l'objet O à analyser un faisceau dans le domaine de l'ultra-violet. L'objet O à analyser réémet alors un faisceau dans le domaine fluorescent. De préférence, l'ensemble d'illumination émet un faisceau dans les longueurs d'ondes égales à 257 nm, 365 nm, 450 pour couvrir le domaine d'absorption des fluorophores. L'objet à analyser réémet dans des longueurs d'ondes comprises entre 300 et 700 nm.

Le faisceau issu de l'objet O à analyser arrive sur une première face M11 d'un premier miroir M1 de repliement.

Le premier miroir M1 comprend donc une première face M11 qui comprend un traitement métallique réfléchissant des deux côtés et une seconde face M12 traitée anti reflet. Le premier miroir M1 comprend également en son centre une fente F obtenue par absence de traitement métallique.

De manière avantageuse, la fente F est réalisée par une ouverture dans le traitement du premier miroir M1 de repliement en forme de fente de quelques dizaines de microns de large par quelques millimètres de long. Le premier miroir M1 de repliement est de préférence en silice fondue.

La première face M11 du premier miroir M1 de repliement réfléchit le faisceau issu de l'objet O vers un miroir M2 sphérique de focalisation, lequel focalise sur la fente F du premier miroir M1 de repliement le faisceau réfléchi par ce miroir M2 sphérique. Ainsi, le faisceau traverse l'épaisseur du premier miroir M1 de repliement via la fente F qui ne sélectionne qu'une ligne du champ objet.

Le faisceau ainsi focalisé arrive alors sur un miroir M3 de collimation parabolique qui collimate le faisceau vers la seconde face M12 du premier miroir M1 de repliement vers un miroir M5 d'imagerie qui image une ligne de l'objet O pour chaque longueur d'onde dispersée par le prisme P sur un ensemble DET de détection qui de manière classique est une caméra CCD. Ainsi, le miroir M5 d'imagerie recrée l'image de l'objet à analyser (c'est-à-dire une ligne) via la fente pour chaque longueur d'onde sur l'ensemble DET de détection.

De manière avantageuse, pour balayer, ligne par ligne l'objet O à analyser, l'ensemble d'illumination comprend au moins une source d'émission S1, S2, S3 mobile et un miroir M0 plan mobile qui est un miroir de changement de visée orientable. Le miroir M0 plan et la source d'émission sont mobiles en même temps.

Dans ce cas, c'est le miroir M0 plan qui collecte le faisceau fluorescent émis par l'objet O après absorption du faisceau ultra-violet.

En outre, un faisceau ultra-violet étant invisible, l'ensemble d'illumination comprend une source d'illumination S' visible coaxiale avec la source d'illumination ultra-violet qui permet d'aligner la source d'illumination ultra-violet sur l'objet O à analyser.

De manière avantageuse, l'ensemble d'illumination comprend avantageusement quatre sources S1, S2, S3, S4 LED collimatées coaxiales dont une émet dans le visible.

De manière complémentaire, selon ce premier mode de réalisation, le spectrophotomètre comprend également une lentille C compensatrice disposée entre le premier miroir M1 de repliement et le prisme disperseur P. Cette lentille C permet de corriger des aberrations introduites par la traversée du premier miroir M1 de repliement celui étant en verre. La lentille C compensatrice est de préférence concave/convexe tiltée.

En outre, toujours selon ce premier mode de réalisation, afin de replier le spectre dispersé par le prisme P disperseur, de manière avantageuse, le spectrophotomètre comprend un second miroir M4 de repliement disposé entre le miroir M5 d'imagerie et l'ensemble DET de détection.

Dans ce cas-là et avantageusement, le miroir M5 d'imagerie est désaxé par rapport au second miroir M4 de repliement. Ceci permet de focaliser le faisceau sans occultation centrale.

En outre, afin que le premier miroir M1 de repliement, le prisme P disperseur et le cas échéant la lentille C compensatrice puissent transmettre dans les longueurs d'ondes du domaine fluorescent comprises entre 300 nm et 700 nm, ces derniers sont en silice fondue.

De manière préférée, selon ce premier mode de réalisation, le chemin optique est le suivant :
- L'ensemble d'illumination est composé de quatre sources à LED collimatées: celle visible sert à l'alignement et trois autres fournissent des longueurs d'onde d'excitation dans le domaine de l'utra-violet.
- Les sources Si sont coaxiales et permettent d'exciter l'objet O à analyser.
- Le flux de fluorescence réémis par l'objet O après absorption de la lumière UV est collecté par le système optique via le miroir plan M0 qui est un miroir de changement de visée orientable. En scannant l'objet O, il est possible de reconstruire une image hyperspectrale de l'objet O.
- Le faisceau est réfléchi par le traitement métallique du miroir de repliement M1 vers le miroir sphérique M2.
- Le miroir sphérique M2 focalise l'image de l'objet O sur la fente du premier miroir M1 de repliement réalisée par une épargne dans le traitement métallique de quelques millimètres de hauteur par quelques dizaines de micromètres de large (compromis résolution luminosité).
- Le faisceau traverse l'épaisseur de verre du premier miroir de repliement M1 via la fente F qui, ainsi, ne sélectionne qu'une ligne du champ objet O.
- Le troisième miroir M3 de collimation qui est un miroir parabolique collimate le faisceau venant de la fente F et le renvoi vers le premier miroir de repliement M1.
- Le faisceau parallèle est alors réfléchi par la face arrière du traitement métallique du premier miroir de repliement M1 via une double traversée de l'épaisseur de verre en direction de l'élément disperseur P.
- La lentille C compensatrice qui est concave/convexe tiltée, corrige l'astigmatisme générée par la première traversée de l'épaisseur du premier miroir M1 en faisceau convergent.
- Le prisme disperseur P ensuite assure la dispersion en longueur d'onde du faisceau parallèle.
- Le second miroir de repliement M4 repli le faisceau.
- Le miroir parabolique d'imagerie M5 qui est « off axis » recrée l'image de l'objet O (une ligne) via la fente F pour chaque longueur d'onde sur le plan de l'ensemble de détection DET qui est un capteur matriciel.

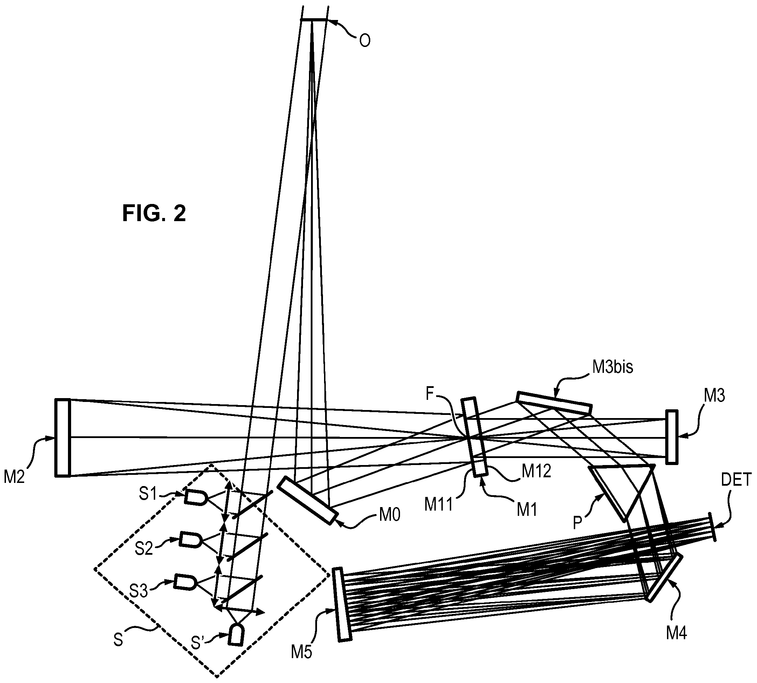

On a illustré en relation avec la **figure 2** un spectrophotomètre selon un second mode de réalisation de l'invention.

Ce mode de réalisation comprend comme le premier mode de réalisation :
- un ensemble S d'illumination ;
- un premier miroir de repliement M1 ;
- un miroir M2 sphérique ;
- un troisième miroir M3 de collimation ;
- un prisme disperseur P ;
- un second miroir M4 de repliement ;
- miroir M5 d'imagerie ;
- un ensemble DET de détection

En outre, selon ce second mode de réalisation le chemin optique du faisceau issu de l'objet O est identique jusqu'à la réflexion du faisceau par le troisième miroir M3 de collimation.

Selon le second mode de réalisation, un quatrième miroir M3bis de changement de visée est disposé entre le prisme disperseur P et le premier miroir de repliement M1. Ce quatrième miroir M3bis de changement de visée permet de limiter l'astigmatisme engendré par la traversée du faisceau du premier miroir M1 de repliement.

## Revendications

1. Spectrophotomètre hyperspectral large bande adapté pour analyser un objet (0) comprenant :
- un ensemble (S) d'illumination comprenant au moins une source (Si) d'émission d'un faisceau lumineux ayant une longueur d'onde appartenant au domaine de l'ultra-violet en direction d'un objet (0) à analyser, ledit ensemble (S) étant en outre configuré pour balayer ligne par ligne l'objet (0) à analyser au moyen de la source (Si) d'émission ;
- un miroir (M2) sphérique de focalisation ;
- un premier miroir (M1) de repliement comprenant une face avant (M11) orientée vers le miroir (M2) sphérique de focalisation ladite première face (M11) ayant un traitement métallique, le premier miroir (M1) ayant en outre une face arrière (M12) opposée à la première face avant (M11), ladite face arrière (M12) comprenant également un traitement métallique , ledit premier miroir (M1) de focalisation comprenant en son centre une fente (F) configurée pour laisser passer une ligne du faisceau issu de l'objet (0) ; le premier miroir (M1) de repliement, le miroir (M2) sphérique de focalisation et la fente (F) étant agencés pour qu'un faisceau fluorescent émis par l'objet (0) après absorption du faisceau ultra-violet par l'objet issu de l'ensemble d'illumination subisse une réflexion depuis la première face (M11) du premier miroir (M1) vers le miroir de focalisation (M2), ledit miroir de focalisation (M2) réfléchissant alors le faisceau ainsi focalisé vers la fente (F) ; le spectrophotomètre comprenant
- un miroir (M3) de collimation parabolique ;
- un prisme disperseur (P) ; le miroir (M3) de collimation étant agencé par rapport au premier miroir (M1) de repliement pour collimater le faisceau issu de la fente (F) vers la seconde face du traitement métallique du premier miroir de repliement laquelle dirige le faisceau collimaté vers le prisme (P) disperseur;
- un miroir (M5) d'imagerie ;
- un ensemble de détection (DET) ; le miroir (M5) d'imagerie étant agencé par rapport au prisme disperseur (P) pour imager une ligne de l'objet pour chaque longueur d'onde dispersée sur l'ensemble (DET) de détection.

2. Spectrophotomètre selon la revendication 1, dans lequel l'ensemble (Si) d'illumination comprend au moins une source d'émission mobile et un miroir (MO) plan mobile, ladite source d'émission et ledit miroir (MO) permettant de balayer ligne par ligne l'objet à analyser lorsqu'ils se déplacent, de préférence en rotation, le miroir (MO) plan étant configuré pour collecter le faisceau fluorescent émis pas l'objet après absorption du faisceau ultra-violet issu de l'ensemble d'illumination pour le diriger vers la première face (M11) du premier miroir (M1) de repliement.

3. Spectrophotomètre selon l'une des revendications précédentes, dans lequel l'ensemble (Si) d'illumination comprend en outre une source d'illumination visible configurée pour émettre un faisceau lumineux dans le domaine du visible, ladite source d'illumination visible étant en outre configurée pour permettre un alignement de ladite source d'émission sur l'objet (0) à analyser.

4. Spectrophotomètre selon l'une des revendications précédentes, comprenant une lentille (C) compensatrice disposée entre le premier miroir (M1) de repliement et le prisme disperseur (P), ladite lentille (C) étant configurée pour corriger des aberrations introduites par la traversée du premier miroir (M1) de repliement, ledit premier miroir (M1) de repliement étant en silice fondue.

5. Spectrophotomètre selon l'une des revendications 1 à 3, comprenant un quatrième miroir (M3bis) de changement de visée disposé entre le prisme disperseur (P) et le premier miroir de repliement (M1), ledit quatrième miroir (M3bis) étant configuré pour limiter l'astigmatisme engendré par la traversée du faisceau du premier miroir (M1) de repliement.

6. Spectrophotomètre selon l'une des revendications précédentes, comprenant un second miroir (M4) de repliement du spectre dispersé par le prisme (P) disperseur, le second miroir M4 étant disposé entre le miroir (M5) d'imagerie et l'ensemble (DET) de détection, ledit miroir (M5) d'imagerie étant désaxé par rapport au second miroir (M4) de repliement.

7. Spectrophotomètre selon l'une des revendications précédentes, dans lequel l'ensemble d'illumination comprend trois sources (51, S2, S3), chacune configurée pour émettre un faisceau lumineux dans les longueurs d'ondes suivantes : 257 nm, 365 nm, 450nm.

8. Spectrophotomètre selon l'une des revendications précédentes, dans lequel le prisme disperseur (P) et le premier miroir (M1) sont en matériau permettant d'assurer la transmission dans le domaine fluorescent, le matériau étant de préférence de la silice fondue.

## Patentansprüche

1. Hyperspektrales breitbandiges Spektralphotometer, das geeignet ist, ein Objekt (0) zu analysieren, umfassend:
- eine Beleuchtungsbaugruppe (S), die mindestens eine Quelle (Si) zum Emittieren eines Lichtstrahls mit einer Wellenlänge im Bereich des Ultravioletten in Richtung eines zu analysierenden Objekts (0) umfasst, wobei die Baugruppe (S) weiter so ausgelegt ist, dass sie das zu analysierende Objekt (0) mittels der Emissionsquelle (Si) Zeile für Zeile abtastet;
- einen sphärischen Fokussierspiegel (M2);
- einen ersten Umlenkspiegel (M1), der eine in Richtung des sphärischen Fokussierspiegels (M2) ausgerichtete vordere Seite (M11) umfasst, wobei die erste Seite (M11) eine metallische Behandlung aufweist, wobei der erste Spiegel (M1) weiter eine der ersten vorderen Seite (M11) gegenüberliegende hintere Seite (M12) aufweist, wobei die hintere Seite (M12) ebenfalls eine metallische Behandlung umfasst, wobei der erste Fokussierspiegel (M1) in seiner Mitte einen Schlitz (F) umfasst, der so ausgelegt ist, dass er eine Zeile des von dem Objekt (0) stammenden Strahls durchtreten lässt; wobei der erste Umlenkspiegel (M1), der sphärische Fokussierspiegel (M2) und der Schlitz (F) so eingerichtet sind, dass ein fluoreszierender Strahl, der nach Absorption des von der Beleuchtungsbaugruppe stammenden ultravioletten Strahls durch das Objekt vom Objekt (0) emittiert wird, eine Reflexion von der ersten Seite (M11) des ersten Spiegels (M1) in Richtung des Fokussierspiegels (M2) erfährt, wobei der Fokussierspiegel (M2) dann den so fokussierten Strahl in Richtung des Schlitzes (F) reflektiert; wobei das Spektralphotometer umfasst
- einen parabolischen Kollimationsspiegel (M3);
- ein Dispersionsprisma (P); wobei der Kollimationsspiegel (M3) in Bezug auf den ersten Umlenkspiegel (M1) so eingerichtet ist, dass er den aus dem Schlitz (F) stammenden Strahl in Richtung der zweiten Seite der metallischen Behandlung des ersten Umlenkspiegels kollimiert, die den kollimierten Strahl in Richtung des Dispersionsprismas (P) lenkt;
- einen Abbildungsspiegel (M5);
- eine Detektionsbaugruppe (DET); wobei der Abbildungsspiegel (M5) in Bezug auf das Dispersionsprisma (P) so eingerichtet ist, dass er an der Detektionsbaugruppe (DET) für jede dispergierte Wellenlänge eine Zeile des Objekts abbildet.

2. Spektralphotometer nach Anspruch 1, wobei die Beleuchtungsbaugruppe (Si) mindestens eine bewegliche Emissionsquelle und einen beweglichen Planspiegel (MO) umfasst, wobei die Emissionsquelle und der Spiegel (MO), wenn sie sich vorzugsweise drehend bewegen, es ermöglichen, das zu analysierende Objekt Zeile für Zeile abzutasten, wobei der Planspiegel (MO) so ausgelegt ist, dass er den fluoreszierenden Strahl, der nach Absorption des von der Beleuchtungsbaugruppe stammenden ultravioletten Strahls vom Objekt emittiert wird, sammelt, um ihn in Richtung der ersten Seite (M11) des ersten Umlenkspiegels (M1) zu lenken.

3. Spektralphotometer nach einem der vorstehenden Ansprüche, wobei die Beleuchtungsbaugruppe (Si) weiter eine sichtbare Beleuchtungsquelle umfasst, die so ausgelegt ist, dass sie einen Lichtstrahl im Bereich des Sichtbaren emittiert, wobei die sichtbare Beleuchtungsquelle weiter so ausgelegt ist, dass sie ein Ausrichten der Emissionsquelle auf das zu analysierende Objekt (0) ermöglicht.

4. Spektralphotometer nach einem der vorstehenden Ansprüche, das eine Ausgleichslinse (C) umfasst, die zwischen dem ersten Umlenkspiegel (M1) und dem Dispersionsprisma (P) angeordnet ist, wobei die Linse (C) so ausgelegt ist, dass sie Aberrationen, die durch den Durchgang durch den ersten Umlenkspiegel (M1) eingebracht werden, korrigiert, wobei der erste Umlenkspiegel (M1) aus Quarzglas besteht.

5. Spektralphotometer nach einem der Ansprüche 1 bis 3, das einen vierten Blickrichtungsänderungsspiegel (M3a) umfasst, der zwischen dem Dispersionsprisma (P) und dem ersten Umlenkspiegel (M1) angeordnet ist, wobei der vierte Spiegel (M3a) so ausgelegt ist, dass er den durch den Durchgang des Strahls durch den ersten Umlenkspiegel (M1) erzeugten Astigmatismus begrenzt.

6. Spektralphotometer nach einem der vorstehenden Ansprüche, das einen zweiten Spiegel (M4) zum Umlenken des durch das Dispersionsprisma (P) dispergierten Spektrums umfasst, wobei der zweite Spiegel (M4) zwischen dem Abbildungsspiegel (M5) und der Detektionsbaugruppe (DET) angeordnet ist, wobei der Abbildungsspiegel (M5) in Bezug auf den zweiten Umlenkspiegel (M4) achsversetzt ist.

7. Spektralphotometer nach einen der vorstehenden Ansprüche, wobei die Beleuchtungsbaugruppe drei Quellen (51, S2, S3) umfasst, die jeweils so ausgelegt sind, dass sie einen Lichtstrahl in den folgenden Wellenlängen emittieren: 257 nm, 365 nm, 450 nm.

8. Spektralphotometer nach einen der vorstehenden Ansprüche, wobei das Dispersionsprisma (P) und der erste Spiegel (M1) aus einem Material bestehen, das es ermöglicht, die Transmission im fluoreszierenden Bereich sicherzustellen, wobei es sich bei dem Material vorzugsweise um Quarzglas handelt.

## Claims

1. A broadband hyperspectral spectrophotometer suitable for analyzing an object (0) comprising:
- an illumination assembly (S) comprising at least one source (Si) for emitting a light beam having a wavelength belonging to the ultraviolet region towards an object (0) to be analyzed, said assembly (S) being further configured to scan line by line the object (0) to be analyzed by means of the emission source (Si);
- a spherical focusing mirror (M2);
- a first fold mirror (M1) comprising a front face (M11) oriented towards the spherical focusing mirror (M2), said first face (M11) having a metal treatment, the first mirror (M1) further having a rear face (M12) opposite to the first front face (M11), said rear face (M12) also comprising a metal treatment, said first focusing mirror (M1) comprising at its center a slit (F) configured to allow the passage of a line of the beam coming from the object (0); the first fold mirror (M1), the spherical focusing mirror (M2) and the slit (F) being arranged so that a fluorescent beam emitted by the object (0) after absorption of the ultraviolet beam by the object coming from the illumination assembly undergoes a reflection from the first face (M11) of the first mirror (M1) towards the focusing mirror (M2), said focusing mirror (M2) then reflecting the beam thus focused towards the slit (F); the spectrophotometer comprising
- a parabolic collimating mirror (M3);
- a dispersing prism (P); the collimating mirror (M3) being arranged relative to the first fold mirror (M1) to collimate the beam coming from the slit (F) towards the second face of the metal treatment of the first fold mirror which directs the collimated beam towards the dispersing prism (P);
- an imaging mirror (M5);
- a detection assembly (DET); the imaging mirror (M5) being arranged relative to the dispersing prism (P) to image a line of the object for each wavelength dispersed over the detection assembly (DET).

2. The spectrophotometer according to claim 1, wherein the illumination assembly (Si) comprises at least one movable emission source and a movable plane mirror (MO), said emission source and said mirror (MO) allowing scanning line by line the object to be analyzed when they move, preferably in rotation, the plane mirror (MO) being configured to collect the fluorescent beam emitted by the object after absorption of the ultraviolet beam coming from the illumination assembly to direct it towards the first face (M11) of the first fold mirror (M1).

3. The spectrophotometer according to any of the preceding claims, wherein the illumination assembly (Si) further comprises a visible illumination source configured to emit a light beam in the visible region, said visible illumination source being further configured to enable an alignment of said emission source on the object (0) to be analyzed.

4. The spectrophotometer according to any of the preceding claims, comprising a compensating lens (C) disposed between the first fold mirror (M1) and the dispersing prism (P), said lens (C) being configured to correct aberrations introduced by passing through the first fold mirror (M1), said first fold mirror (M1) being made of fused silica.

5. The spectrophotometer according to any of claims 1 to 3, comprising a fourth sight changing mirror (M3bis) disposed between the dispersing prism (P) and the first fold mirror (M1), said fourth mirror (M3bis) being configured to limit the astigmatism caused by the passage of the beam through the first fold mirror (M1).

6. The spectrophotometer according to any of the preceding claims, comprising a second mirror (M4) for folding the spectrum dispersed by the dispersing prism (P), the second mirror M4 being disposed between the imaging mirror (M5) and the detection assembly (DET), said imaging mirror (M5) being offset with respect to the second fold mirror (M4).

7. The spectrophotometer according to any of the preceding claims, wherein the illumination assembly comprises three sources (S1, S2, S3), each configured to emit a light beam in the following wavelengths: 257 nm, 365 nm, 450 nm.

8. The spectrophotometer according to any of the preceding claims, wherein the dispersing prism (P) and the first mirror (M1) are made of a material allowing ensuring the transmission in the fluorescent region, the material preferably being fused silica.
